# EUROPÄISCHE PATENTANMELDUNG

(11) **EP 4 190 640 A1**
(43) Veröffentlichungstag der Anmeldung: **07.06.2023**
(21) Anmeldenummer: 22208154.9
(22) Anmeldetag: 17.11.2022
(51) Int. Cl.: B60R 9/058

(54) **DACHTRÄGERANORDNUNG FÜR EIN KRAFTFAHRZEUG**

(30) Priorität: 30.11.2021 DE 102021213543
(71) Anmelder: ATERA GmbH, 88299 Leutkirch im Allgäu (DE)
(72) Erfinder: Rogler, Harald, 88484 Gutenzell-Hürbel (DE); Schmidt, Maximilian, 87764 Legau (DE); Pickl, Adolf, 87487 Wiggensbach (DE)
(74) Vertreter: Patentanwälte Ruff, Wilhelm, Beier, Dauster & Partner mbB

(57) **Zusammenfassung**

Eine derartige Dachträgeranordnung mit einem Trägerrohr sowie mit wenigstens einem Stützfuß und mit einer Fixiereinrichtung zum Fixieren des Trägerrohrs an dem Stützfuß, die einen in das Trägerrohr hineinragenden Klemmhebel sowie ein Klemmgegenstück umfasst, wobei der Klemmhebel und das Klemmgegenstück mittels einer manuell bedienbaren Stelleinheit relativ zueinander beweglich sind, ist bekannt.

Erfindungsgemäß sind der Klemmhebel und das Klemmgegenstück dazu ausgebildet, sich in einer Klemmstellung an einer fahrzeugseitigen Dachreling abzustützen, und sowohl der Klemmhebel als auch das Klemmgegenstück sind als Metallbauteile gestaltet, die beide bis zu dem Trägerrohr hin erstreckt sind derart, dass in der Klemmstellung wenigstens ein Wandungsabschnitt des Trägerrohrs von gegenüberliegenden Seiten her - in Hochrichtung gesehen - kraftübertragend zwischen dem Klemmhebel und dem Klemmgegenstück gestützt ist.

## Beschreibung

Die Erfindung betrifft eine Dachträgeranordnung für ein Kraftfahrzeug mit einem Trägerrohr, sowie mit wenigstens einem Stützfuß und mit einer Fixiereinrichtung zum Fixieren des Trägerrohrs an dem Stützfuß, die einen in das Trägerrohr hineinragenden Klemmhebel sowie ein Klemmgegenstück umfasst, wobei der Klemmhebel und das Klemmgegenstück mittels einer manuell bedienbaren Stelleinheit relativ zueinander beweglich sind.

Eine derartige Dachträgeranordnung ist aus der DE 10 2014 206 719 A1 bekannt. Die Dachträgeranordnung weist einen Stützfuß auf, der mittels eines massiven Stützkörpers auf einer fahrzeugseitigen Dachreling abstützbar ist. Zur Fixierung des Stützfußes an der Dachreling ist innenseitig ein Klemmhebel vorgesehen, der durch einen Schlitz in einem Boden eines Trägerrohrs der Dachträgeranordnung hindurchragt und mit seinem Kopf an einer in dem Trägerrohr positionierten Stützzunge abgestützt ist. Dem Klemmhebel ist als Klemmgegenstück außenseitig eine Stützzunge zugeordnet, die sich auf einem balligen Abschnitt des massiven Stützkörpers abstützt und mittels einer Stellschraubenanordnung außenseitig gegen die Dachreling gezogen werden kann. Die Stellschraubenanordnung verbindet den innenseitigen Klemmhebel und die außenseitige Stützzunge miteinander, so dass bei einem entsprechenden Schraubvorgang der Klemmhebel und die Stützzunge gegeneinander gezogen werden. Der Klemmhebel ist in dem Stützkörper schwenkbeweglich gelagert. Der Stützkörper selbst bildet die innenseitige Anlagefläche an der Dachreling. Durch entsprechendes Spannen des Klemmhebels wird der Stützkörper gegen die Dachreling gepresst bei gleichzeitiger außenseitiger Klemmung an der Dachreling durch die Stützzunge.

Aufgabe der Erfindung ist es, eine Dachträgeranordnung der eingangs genannten Art zu schaffen, die unabhängig von Temperatureinflüssen eine sichere dachseitige Befestigung ermöglicht.

Diese Aufgabe wird dadurch gelöst, dass der Klemmhebel und das Klemmgegenstück dazu ausgebildet sind, sich in einer Klemmstellung an einer fahrzeugseitigen Dachreling abzustützen, und dass sowohl der Klemmhebel als auch das Klemmgegenstück als Metallbauteile gestaltet sind, die beide bis zu dem Trägerrohr hin erstreckt sind derart, dass in der Klemmstellung wenigstens ein Wandungsabschnitt des Trägerrohrs von gegenüberliegenden Seiten her - in Hochrichtung gesehen - kraftübertragend zwischen dem Klemmhebel und dem Klemmgegenstück gestützt ist. Damit ergibt sich in montiertem Zustand des Stützfußes und damit der Dachträgeranordnung ein Kraftschluss zwischen der Dachreling und dem Trägerrohr ausschließlich über Metallbauteile, wodurch Temperatureinflüsse, die Kunststoffbauteile beeinträchtigen können, keine Rolle spielen. Die erfindungsgemäße Lösung ermöglicht eine sandwichartige Klemmung des entsprechenden Wandungsabschnitts des Trägerrohrs. Die erfindungsgemäße Lösung eignet sich in besonders vorteilhafter Weise für Personenkraftwagen, die dachseitig mit einer Dachreling versehen sind.

In Ausgestaltung der Erfindung weist das Klemmgegenstück einen unteren Anlagebereich auf, mit dem das Klemmgegenstück in der Klemmstellung innenseitig an der Dachreling abgestützt ist. Unter der innenseitigen Abstützung an der Dachreling ist eine zur Dachmitte des Kraftfahrzeugs gewandte Innenkontur der Dachreling zu verstehen.

In weiterer Ausgestaltung der Erfindung weist der Klemmhebel an einem unteren Ende einen Stegabschnitt auf, der in der Klemmstellung einen außenseitigen Bereich der Dachreling formschlüssig untergreift. Der außenseitige Bereich der Dachreling liegt in Fahrzeugquerrichtung abliegend zur Dachmitte im Bereich der außenseitigen Kontur der Dachreling. Der Stegabschnitt ist einstückiger Bestandteil des Klemmhebels und damit ebenfalls metallisch.

In weiterer Ausgestaltung der Erfindung sind das Klemmgegenstück und der Klemmhebel über die manuell bedienbare Stelleinheit mechanisch miteinander gekoppelt. Die mechanische Kopplung erfolgt vorzugsweise analog einer Stellschraubenanordnung, wie sie aus der DE 10 2014 206 719 A1 bekannt ist.

In weiterer Ausgestaltung der Erfindung ist die Stelleinheit als Linearstelleinheit ausgeführt, die einends an dem Klemmgegenstück und anderenends an dem Klemmhebel abgestützt ist und derart gestaltet ist, dass bei einer Linearverstellung in Richtung der Klemmstellung zwangsgesteuert ein innen- und außenseitiges Umgreifen der Dachreling einerseits und ein synchrones ober- und unterseitiges Klemmen des Wandungsabschnitts des Trägerrohrs erfolgt. Der Klemmhebel und das Klemmgegenstück sind relativ zu dem Trägerrohr derart gelagert und abgestützt, dass bei einer Kontaktierung des unteren Bereichs des Klemmgegenstücks wie auch des unteren Bereichs des Klemmhebels an der Dachreling um die entsprechenden Kontaktierungspunkte eine Schwenkbewegung des Klemmhebels und des Klemmgegenstücks erfolgt, wodurch das Klemmgegenstück und der Klemmhebel in Fahrzeugquerrichtung in Richtung der Dachreling aufeinanderzubewegt werden und gleichzeitig obere Kopfbereiche des Klemmhebels und des Klemmgegenstücks in Fahrzeughochrichtung aufeinanderzubewegt werden, wodurch sich die sandwichartige Klemmung des Wandungsabschnitts des Trägerrohrs synchron zur Klemmung des Klemmgegenstückes und des Klemmhebels an der Radreling ergibt.

In weiterer Ausgestaltung der Erfindung ist als Wandungsabschnitt des Trägerrohrs ein Boden des Trägerrohrs vorgesehen. Dabei greift ein Kopfabschnitt des Klemmhebels oder des Klemmgegenstücks in das Innere des als Hohlprofil gestalteten Trägerrohrs ein, so dass eines der beiden Klemmbauteile sich innenseitig von oben her und das andere Klemmbauteil außenseitig von unten her an dem Boden des Trägerrohrs abstützen.

In weiterer Ausgestaltung der Erfindung weist das Klemmgegenstück oberseitig eine Abstützfläche auf, die sich in der Klemmstellung außenseitig an einem Boden des Trägerrohrs abstützt. Die Abstützfläche stützt demzufolge den Boden des Trägerrohrs von einer Unterseite her. Die Abstützfläche ist einstückiger Bestandteil des Klemmgegenstücks und damit metallisch. Das Trägerrohr selbst ist ebenfalls aus Metall hergestellt, vorzugsweise aus einer Aluminiumlegierung.

In weiterer Ausgestaltung der Erfindung weist der Klemmhebel einen Lagerfortsatz auf, der durch einen Schlitz des Trägerrohrs in das Trägerrohr hineinragt und wenigstens einen Klemmbacken aufweist, der sich in der Klemmstellung innenseitig an dem Boden des Trägerrohrs abstützt. Der Klemmhebel ragt somit kopfseitig mittels eines Lagerfortsatzes durch einen Schlitz des Bodens des Trägerrohrs hindurch. Der Klemmbacken weist eine Breite auf, die größer ist als die Breite des Schlitzes des Trägerrohrs, so dass der Klemmhebel in Hochrichtung formschlüssig in dem Trägerrohr gesichert ist.

In weiterer Ausgestaltung der Erfindung ist das Klemmgegenstück oberseitig mit einem Haltestück versehen, das eine lose Einhängung des Klemmgegenstücks in ein Langloch des Bodens des Trägerrohrs ermöglicht. Hierdurch sind sowohl das Klemmgegenstück als auch der Klemmhebel bereits in einem Vormontagezustand mit dem Trägerrohr verbunden und können gemeinsam mit diesem gehandhabt werden.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Fig. 1: zeigt in einer Schnittdarstellung eine erste Ausführungsform einer erfindungsgemäßen Dachträgeranordnung bei lediglich teilweiser Darstellung eines Trägerrohrs und im Bereich eines Stützfußes,
- Fig. 2: in einer weiteren Darstellung aus anderer Perspektive den Stützfuß nach Fig. 1,
- Fig. 3: in einer Schnittdarstellung metallische Klemmbauteile der Dachträgeranordnung gemäß Fig. 1 zur Erläuterung der Funktionsweise,
- Fig. 4: in anderer perspektivischer Darstellung die Klemmbauteile gemäß Fig. 3,
- Fig. 5: eine weitere Ausführungsform einer erfindungsgemäßen Dachträgeranordnung im Bereich eines Stützfußes und
- Fig. 6: in vergrößerter Darstellung eine Draufsicht auf eine Unterseite eines Trägerrohrs für die Dachträgeranordnung gemäß Fig. 5.

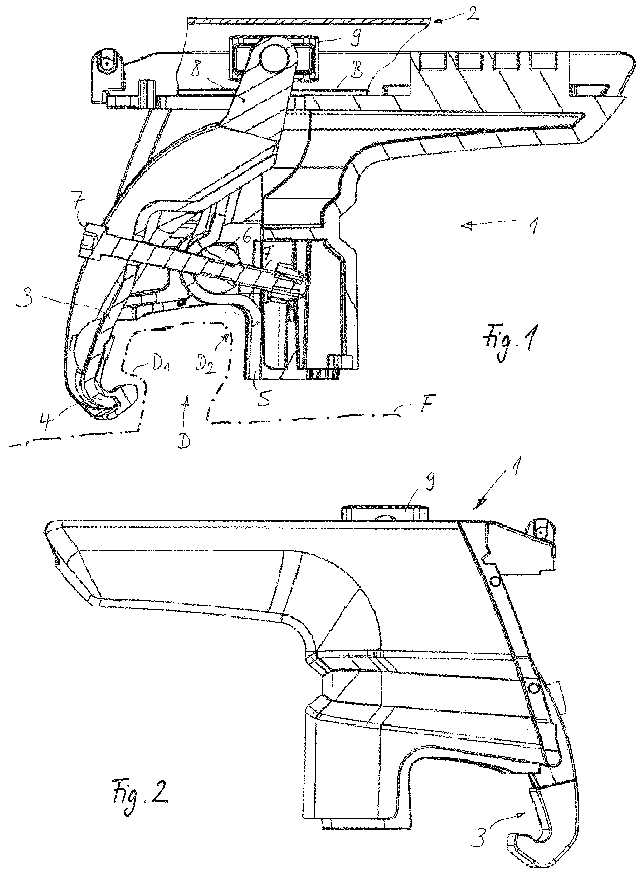

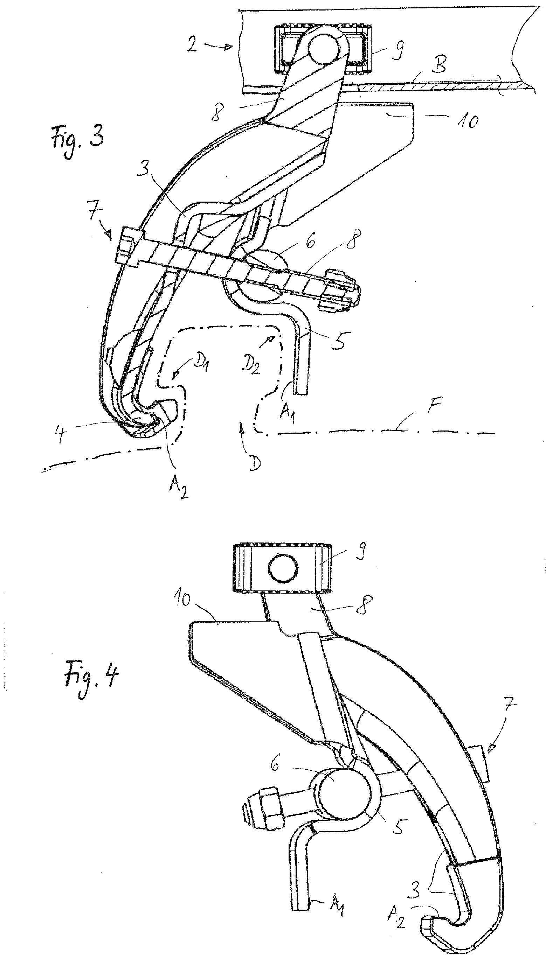

Ein nicht dargestellter Personenkraftwagen weist ein in Fig. 1 und 3 angedeutetes Fahrzeugdach F auf, auf dem auf gegenüberliegenden Seiten jeweils eine im Wesentlichen in Fahrzeuglängsrichtung erstreckte Dachreling D befestigt ist. Zwischen den gegenüberliegenden Dachrelings D erstreckt sich eine Dachträgeranordnung, die anhand der Fig. 1 bis 4 lediglich teilweise dargestellt ist. Eine solche Dachträgeranordnung weist ein in montiertem Zustand auf dem Fahrzeugdach F in Fahrzeugquerrichtung erstrecktes Trägerrohr 2 auf, das an zwei Stützfüßen 1 gehalten ist, von denen in den Zeichnungen lediglich ein Stützfuß 1 dargestellt ist. Der gegenüberliegende Stützfuß ist in gleicher Weise gestaltet, so dass für diesen gegenüberliegenden Stützfuß auf die Ausführungen zu dem Stützfuß gemäß den Fig. 1 bis 4 verwiesen werden kann. Der Stützfuß 1 gemäß den Fig. 1 bis 4 weist einen nicht näher bezeichneten, aus Kunststoff bestehenden Grundkörper auf, der im Wesentlichen Design- und Verkleidungszwecken dient.

Um das Trägerrohr 2 mittels des Stützfußes 1 auf der Dachreling D fixieren zu können, weist der Stützfuß 1 einen außenseitigen Klemmhebel 3 und ein innenseitiges Klemmgegenstück 5 auf, die beide metallische Klemmbauteile bilden. Sowohl der Klemmhebel 3 als auch das Klemmgegenstück 5 sind aus Stahl als einteilige Blechbiegeteile ausgeführt. Das Klemmgegenstück 5 ist auf einer zu einer Fahrzeugmitte gewandten Innenseite der Dachreling D und der Klemmhebel 3 auf einer in Fahrzeugquerrichtung nach außen gewandten Außenseite der Dachreling D zugeordnet. Die beiden Klemmbauteile sind über eine Linearstelleinheit mechanisch miteinander gekoppelt, die als Stellschraubenanordnung 6 bis 8 ausgeführt ist.

Der außenliegende Klemmhebel 3 weist einen Kopfabschnitt auf, der durch einen zu einer Stirnseite des Trägerrohrs 2 hin offenen Längsschlitz in einem Boden B des Trägerrohrs 2 in den Hohlraum des als Hohlprofil gestalteten Trägerrohrs 2 hineinragt. An einem unteren Endbereich ist der Klemmhebel 3 mit einem hakenartig nach innen ragenden Stegabschnitt 4 versehen, der dazu vorgesehen ist, eine komplementäre, nach innen gezogene Anlagekontur D₁ der Dachreling D zu untergreifen.

Das Klemmgegenstück 5 ist analog einer innenseitigen Konturwölbung D₂ der Dachreling D gekrümmt, um in montierter Fixierstellung, d.h. einer Klemmstellung, eine innenseitige Klemmanlage des Klemmgegenstücks 5 im Bereich der Konturwölbung D₂ der Dachreling D zu erzielen.

Dem Kopfabschnitt 8 des Klemmhebels 3 ist ein Klemmbacken 9 zugeordnet, der quaderartig in montiertem Zustand innerhalb des Hohlraums des Trägerrohrs 2 vorgesehen ist. An dem Klemmbacken 9 ist der Klemmhebel 3 mit seinem Kopfabschnitt 8 um eine in Fahrzeuglängsrichtung erstreckte Schwenkachse begrenzt schwenkbeweglich gelagert.

Das Klemmgegenstück 5 weist kopfseitig eine Abstützfläche 10 auf, die sich in fixierter Klemmstellung der Dachträgeranordnung an einer Unterseite des Bodens B des Trägerrohrs 2 abstützt. Der Kopfabschnitt 8 des Klemmhebels 3 ist von einer Stirnseite des Trägerrohrs 2 durch den nicht näher bezeichneten, stirnseitig offenen Längsschlitz in dem Boden B in den Hohlraum des Trägerrohrs 2 eingeführt.

Die Linearstelleinheit in Form der Stellschraubenanordnung 6 bis 8 weist eine Kopfschraube 7 mit einem Außengewinde 7' und eine zylinderförmig gestaltete Gewindemutter 6 mit einem komplementären Innengewinde auf. Die Gewindemutter 6 ist in einer konvexen Krümmung des Klemmgegenstücks 5 formschlüssig und bündig abgestützt. Ein Kopf der Kopfschraube 7 liegt außenseitig in nicht näher dargestellter Weise an einem Stützabschnitt des Klemmhebels 3 an. Wenn somit die Kopfschraube 7 in einer Drehrichtung eingeschraubt wird, dann werden zwangsläufig der Klemmhebel 3 und das Klemmgegenstück 5 im Wesentlichen in Fahrzeugquerrichtung gegeneinander gezogen, wodurch der Stegabschnitt 4 des Klemmhebels 3 und ein unterer Bereich des Klemmgegenstücks 5 an entsprechenden außen- bzw. innenseitigen Außenkonturbereichen der Dachreling zur Anlage kommen. Dabei ergeben sich für den außenliegenden Klemmhebel 3 ein Anlagebereich A₂ und für das innenliegende Klemmgegenstück 5 ein Anlagebereich A₁ an der Außenkontur der Dachreling D. Diese Anlagebereiche A₂ und A₁ bilden virtuelle Schwenkpunkte, die auch als Kontaktierungspunkte bezeichnet sind, um die sich der Klemmhebel 3 und das Klemmgegenstück 5 bei einem weiteren Zuschrauben der Kopfschraube 7 aufeinanderzubewegen. Hierdurch erfolgt zwangsläufig ein Absenken des Klemmbackens 9 in dem Trägerrohr 2 nach unten und ein synchrones Anheben der Abstützfläche 10 des Kopfabschnitts des Klemmgegenstücks 5 nach oben. Hierdurch gelangt die Abstützfläche 10 im Bereich der Unterseite des Bodens B des Trägerrohrs 2 zur Anlage und eine Unterseite des Klemmbackens 9 des Klemmhebels 3 kommt auf der im Inneren des Trägerrohrs 2 befindlichen Oberseite des Bodens B zur Anlage. Somit ergibt sich eine Fixierung des Trägerrohrs 2 relativ zu dem Klemmgegenstück 5 und relativ zu dem Klemmhebel 3 und gleichzeitig eine Fixierung des Klemmhebels 3 und des Klemmgegenstücks 5 innen- und außenseitig an der Dachreling D. Für ein Lösen der Klemmung und damit der Fixierung des Trägerrohrs 2 wird die Linearstelleinheit in Form der Stellschraubanordnung 6 bis 8 in einfacher Weise in entgegengesetzter Richtung gedreht, wodurch sich der Klemmhebel 3 und das Klemmgegenstück 5 wieder voneinander entfernen und die Dachreling D wie auch den Boden B des Trägerrohrs 2 freigeben.

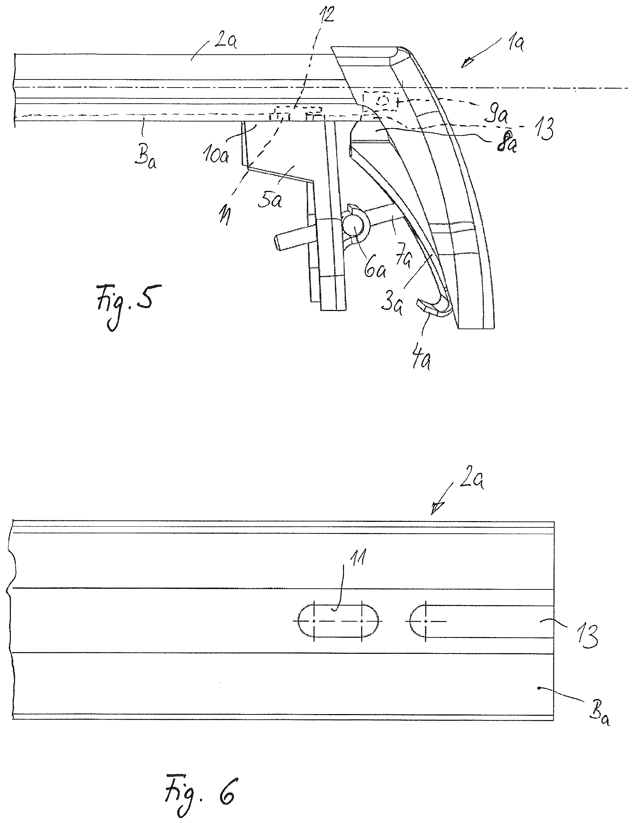

Die Dachträgeranordnung 1a gemäß den Fig. 5 und 6 ist vom grundsätzlichen Funktionsprinzip in gleicher Weise gestaltet wie die Dachträgeranordnung 1 gemäß den Fig. 1 bis 4. Zur Vermeidung von Wiederholungen wird daher ergänzend auf die Ausführungen zu der Dachträgeranordnung 1 verwiesen. Funktionsgleiche Bauteile und Abschnitte sind mit gleichen Bezugszeichen, jedoch unter Hinzufügung des Buchstabens a versehen. Nachfolgend wird auf die Unterschiede der Dachträgeranordnung 1a eingegangen.

Wesentlicher Unterschied ist es, dass das innenliegende Klemmgegenstück 5a den Boden Bₐ des Trägerrohrs 2a nicht nur von unten her mit der Abstützfläche 10a abstützt, sondern zusätzlich auch permanent in dem Trägerrohr 2a gehalten ist. Hierzu ist der Boden Bₐ des Trägerrohrs 2a nicht nur mit einem zur Stirnseite des Trägerrohrs 2a hin offenen Längsschlitz 13 versehen, wie er auch bei dem Trägerrohr 2 gemäß den Fig. 1 bis 4 vorgesehen ist, sondern auch mit einem weiteren Langloch 11, das zu dem Längsschlitz 13 koaxial beabstandet in dem Boden Bₐ vorgesehen ist. Das Klemmgegenstück 5a weist kopfseitig oberhalb der Abstützfläche 10a ein T-förmiges Haltestück 12 auf, das derart gestaltet ist, dass es von unten her durch das Langloch 11 hindurchgefädelt werden kann und durch anschließendes Verdrehen um eine Fahrzeughochachse um 90° in seine in Fig. 5 gezeigte Stellung verdreht wird und formschlüssig in dem Hohlraum des Trägerrohrs 2a gefangen ist. Das Haltestück 12 ist fest mit dem Kopfbereich des Klemmgegenstücks 5a verbunden, wobei entsprechende T-Stege in größerem Abstand zu der Abstützfläche 10a positioniert sind wie eine Dicke des Bodens Bₐ, so dass das Klemmgegenstück 5a in eingefädeltem und gedrehtem Zustand mit Spiel in Hochrichtung an dem Boden Bₐ hängt.

Da auch der Klemmhebel 3a über den Klemmbacken 9a permanent im Hohlraum des Trägerrohrs 2a gesichert ist, sind in einer Vormontagestellung sowohl das Klemmgegenstück 5a als auch der Klemmhebel 3a bereits locker mit dem Trägerrohr 2a verbunden. Dies erleichtert für eine Bedienperson eine Vormontage und Endmontage der Trägeranordnung 1a. Im Übrigen ist die Funktionsweise des Stützfußes mit dem Klemmgegenstück 5a und dem Klemmhebel 3a der Dachträgeranordnung 1a identisch gestaltet wie die Funktionsweise der Dachträgeranordnung 1 gemäß den Fig. 1 bis 4. Bei einem Zuschrauben der Kopfschraube 7a und demzufolge der Stellschraubenanordnung stützen sich das Klemmgegenstück 5a einerseits und der Klemmhebel 3a andererseits im Bereich ihrer unteren Anlageabschnitte an der nicht dargestellten Dachreling ab, wodurch das Klemmgegenstück 5a und der Klemmhebel 3a Schwenkbewegungen um diese virtuellen Schwenkpunkte durchführen. Dadurch wird die Abstützfläche 10a des zu Beginn lose in dem Trägerrohr 2a hängenden Klemmgegenstücks 5a nach oben gedrückt. Gleichzeitig wird zwangsläufig der Klemmbacken 9a des außenliegenden Klemmhebels 3a nach unten gezogen, wodurch der Boden Bₐ des Trägerrohrs 2a sandwichartig zwischen der Abstützfläche 10a und einer Unterseite des Klemmbackens 9a des Klemmhebels 3a eingeklemmt wird. Ein Lösen von der Dachreling erfolgt in entsprechend umgekehrter Weise durch entsprechendes Aufschrauben der Stellschraubenanordnung 6a, 7a.

## Patentansprüche

1. Dachträgeranordnung für ein Kraftfahrzeug mit einem Trägerrohr (2, 2a), sowie mit wenigstens einem Stützfuß (1, 1a) und mit einer Fixiereinrichtung zum Fixieren des Trägerrohrs (2, 2a) an dem Stützfuß (1, 1a), die einen in das Trägerrohr (2, 2a) hineinragenden Klemmhebel (3, 3a) sowie ein Klemmgegenstück (5, 5a) umfasst, wobei der Klemmhebel (3, 3a) und das Klemmgegenstück (5, 5a) mittels einer manuell bedienbaren Stelleinheit relativ zueinander beweglich sind, **dadurch gekennzeichnet, dass** der Klemmhebel (3, 3a) und das Klemmgegenstück (5, 5a) dazu ausgebildet sind, sich in einer Klemmstellung an einer fahrzeugseitigen Dachreling abzustützen, und dass sowohl der Klemmhebel (3, 3a) als auch das Klemmgegenstück (5, 5a) als Metallbauteile gestaltet sind, die beide bis zu dem Trägerrohr (2, 2a) hin erstreckt sind derart, dass in der Klemmstellung wenigstens ein Wandungsabschnitt des Trägerrohrs (2, 2a) von gegenüberliegenden Seiten her - in Hochrichtung gesehen - kraftübertragend zwischen dem Klemmhebel (3, 3a) und dem Klemmgegenstück (5, 5a) gestützt ist.

2. Dachträgeranordnung nach Anspruch 1, **dadurch gekennzeichnet, dass** das Klemmgegenstück (5, 5a) einen unteren Anlagebereich (A₁) aufweist, mit dem das Klemmgegenstück (5, 5a) in der Klemmstellung innenseitig an der Dachreling (D) abgestützt ist.

3. Dachträgeranordnung nach Anspruch 1 oder 2, **dadurch gekennzeichnet, dass** der Klemmhebel (3, 3a) an einem unteren Ende einen Stegabschnitt (4, 4a) aufweist, der in der Klemmstellung einen außenseitigen Bereich der Dachreling (D) formschlüssig untergreift.

4. Dachträgeranordnung nach einem der vorhergehenden Ansprüche, **dadurch gekennzeichnet, dass** das Klemmgegenstück (5, 5a) und der Klemmhebel (3, 3a) über die manuell bedienbare Stelleinheit mechanisch miteinander gekoppelt sind.

5. Dachträgeranordnung nach Anspruch 4, **dadurch gekennzeichnet, dass** die Stelleinheit als Linearstelleinheit ausgeführt ist, die einends an dem Klemmgegenstück (5, 5a) und anderenends an dem Klemmhebel (3, 3a) abgestützt ist und derart gestaltet ist, dass bei einer Linearverstellung in Richtung der Klemmstellung zwangsgesteuert ein innen- und außenseitiges Umgreifen der Dachreling (D) einerseits und ein synchrones ober- und unterseitiges Klemmen des Wandungsabschnitts des Trägerrohrs (2, 2a) erfolgt.

6. Dachträgeranordnung nach einem der vorhergehenden Ansprüche, **dadurch gekennzeichnet, dass** als Wandungsabschnitt des Trägerrohrs (2, 2a) ein Boden (B, Bₐ) des Trägerrohrs (2, 2a) vorgesehen ist.

7. Dachträgeranordnung nach einem der vorhergehenden Ansprüche, **dadurch gekennzeichnet, dass** das Klemmgegenstück (5, 5a) oberseitig eine Abstützfläche (10, 10a) aufweist, die sich in der Klemmstellung außenseitig an einem Boden (B, Bₐ) des Trägerrohrs (2, 2a) abstützt.

8. Dachträgeranordnung nach einem der vorhergehenden Ansprüche, **dadurch gekennzeichnet, dass** der Klemmhebel (3, 3a) einen Lagerfortsatz (Kopfabschnitt 8) aufweist, der durch einen Schlitz (13) des Trägerrohrs (2, 2a) in das Trägerrohr (2, 2a) hineinragt und wenigstens einen Klemmbacken (9, 9a) aufweist, der sich in der Klemmstellung innenseitig an dem Boden (B, Bₐ) des Trägerrohrs (2, 2a) abstützt.

9. Dachträgeranordnung nach einem der vorhergehenden Ansprüche, **dadurch gekennzeichnet, dass** das Klemmgegenstück (5a) oberseitig mit einem Haltestück (12) versehen ist, das eine lose Einhängung des Klemmgegenstücks (5a) in ein Langloch (11) des Bodens (Bₐ) des Trägerrohrs (2a) ermöglicht.
